# EUROPÄISCHE PATENTANMELDUNG

(11) **EP 1 380 766 A2**
(43) Veröffentlichungstag der Anmeldung: **14.01.2004**
(21) Anmeldenummer: 03015083.3
(22) Anmeldetag: 03.07.2003
(51) Int. Cl.: F16D 57/04

(54) **Hydrodynamische Maschine**

(30) Priorität: 09.07.2002 DE 10230859
(71) Anmelder: ZF FRIEDRICHSHAFEN Aktiengesellschaft, 88038 Friedrichshafen (DE)
(72) Erfinder: Klumpp, Andreas, 88046 Friedrichshafen (DE); Hörberger, Edgar, 88048 Friedrichshafen (DE); Huhn, Dirk, 88048 Friedrichshafen (DE); Erich, Alfred, 88085 Langenargen (DE)

(57) **Zusammenfassung**

Eine hydrodynamische Maschine (2) mit einem Gehäuse, das wenigstens ein Rotorschaufelrad (6) und ein Statorschaufelrad (4) umfasst, und Rotorschaufelrad (6) und Statorschaufelrad (4) jeweils eine Anzahl von Schaufeln (8, 10) aufweisen, besitzt an allen Schaufeln (8, 10) wenigstens des Rotorschaufelrades (6) oder des Statorschaufelrades (4) Aussparungen (12, 22, 30, 34, 36, 42, 44, 46, 48) zur Verminderung der Geräuschentwicklung.

## Beschreibung

Die Erfindung betrifft eine hydrodynamische Maschine nach dem Oberbegriff von Anspruch 1.

In hydrodynamischen Systemen, zu denen in Fahrzeuggetrieben und Fahrzeugantriebssträngen angeordnete Drehmomentwandler, Flüssigkeitskupplungen und verschleißfreie Zusatzbremseinrichtungen, sogenannte Retarder, zu zählen sind, werden Bauteile verwendet, die eine Beschaufelung aus einer Anzahl von Schaufeln aufweisen, um mit den verwendeten Flüssigkeiten zusammenzuwirken. Die erreichte hohe Leistungsdichte moderner hydrodynamischer Maschinen hat zu einer entsprechend hohen Belastung der an der Führung der Flüssigkeiten beteiligten Bauteile geführt.

Die instationären hydrodynamischen Zustände in einer hydrodynamischen Maschine in Verbindung mit der hohen Belastung der Bauteile rufen im Zusammenhang mit der kompletten Mediumszu- und -abfuhr durch die Strömungsvorgänge Geräusche hervor, die sich sowohl als Fluid-, als Festkörperund als Luftschall bemerkbar machen und die in verschiedenen Anwendungsbereichen, beispielsweise bei Fahrzeugen im Straßenverkehr, unerwünscht sind. Zur Reduzierung der Geräuschentwicklung bestehen im wesentlichen zwei Möglichkeiten. Die erste Möglichkeit sind sekundäre Schalldämmungsmaßnahmen durch Kapselung des Aggregates. Die zweite Möglichkeit besteht in der Reduzierung des Schalls an der Erregungsstelle. Gegen sekundäre Maßnahmen, beispielsweise in einer Anordnung von Dämmkapseln, sprechen neben den Kosten, dem Montageaufwand und dem benötigten Zusatzbauraum auch die Behinderung der Konvektion. Diese Maßnahmen sind daher nachteilig und abzulehnen.

Aus der EP 0 634 584 B1 ist ein hydrodynamischer Retarder bekannt geworden, bei dem primäre Schalldämpfungsmaßnahmen durchgeführt wurden. Zur Reduzierung von Geräuschen wurden bei diesem Retarder vorgeschlagen, die Anzahl der Schaufeln des Rotorschaufelrades höher auszubilden als die Anzahl der Schaufeln des Statorschaufelrades. Auch diese Maßnahmen führt nicht zum gewünschten Erfolg und ist zu verbessern.

Der vorliegenden Erfindung liegt die Aufgabe zugrunde, die Geräuschreduzierung an hydrodynamischen Maschinen zu verbessern.

Die Aufgabe wird gelöst durch eine hydrodynamische Maschine mit den Merkmalen des Anspruchs 1. Ausgestaltungen sind Gegenstand von Unteransprüchen.

Eine hydrodynamische Maschine weist ein Gehäuse auf, das wenigstens ein Rotorschaufelrad und ein Statorschaufelrad umfasst. Das Rotorschaufelrad und das Statorschaufelrad weist jeweils eine Anzahl von Schaufeln auf. An allen Schaufeln wenigstens eines der genannten Räder, also wenigstens des Rotorschaufelrades oder wenigstens des Statorschaufelrades sind Aussparungen vorgesehen zur Verminderung der Geräuschentwicklung. Im Bereich dieser Aussparung ist die Schaufelkante gegenüber einer gedachten Linie zwischen der radial außen liegenden Bauteilkante und der radial innen liegenden Bauteilkante von Rotorschaufelrad bzw. Statorschaufelrad zurückgenommen. In einer vorteilhaften Ausgestaltung sind die Aussparungen so ausgebildet, dass an allen Schaufeln wenigstens des Rotorschaufelrades oder wenigstens des Statorschaufelrades die projizierte Schaufelfläche der Schaufel, also die bei einer Draufsicht dargestellte Fläche der Schaufel, gegenüber der projizierten Fläche einer wenigstens weitgehend halbkreisförmig ausgebildet Schaufel reduziert ist. Wenn in Folge von einer Schaufel die Rede ist, so gilt das Gesagte für alle Schaufeln an dem jeweiligen Bauteil mit der Folge, dass alle Schaufeln an einem Bauteil bezüglich der Aussparungen gleich ausgebildet sind. In einer Ausführung ist die Schaufel derart ausgebildet, dass sie an ihrem radial außen liegenden Teil an der Schaufelkante eine Aussparung aufweist. In einer weiteren Ausführungsform weist die Schaufel an ihrem radial innen liegenden Teil der Schaufelkante eine Aussparung auf. Eine Ausgestaltung zeigt die Aussparung in der Form eines Kreissegmentes unter einem Winkel von 0 bis 30° gegenüber der Schaufelkante, vorzugsweise liegt der Winkel bei 8°. Bei einer weiteren vorteilhaften Ausgestaltungsform überdecken sich zwei Kreissegmente mit unterschiedlichen Winkeln zur Bildung der Aussparung.
Bei noch einer weiteren vorteilhaften Ausführung ist die Schaufel derart ausgebildet, dass die Schaufel im mittleren Bereich ihrer radialen Ausdehnung an der Schaufelkante eine Aussparung aufweist. Die Aussparung im mittleren Bereich kann sich dabei über die gesamte Länge der Schaufelkante erstrecken. Vorzugsweise weist die Aussparung im mittleren Bereich eine trapezförmige Ausgestaltung auf. In einer Ausführung ist die trapezförmige Ausgestaltung derart, dass die nicht an der Schaufelkante liegenden Ecken abgerundet sind.
Die trapezförmige Ausgestaltung umfasst in einer vorteilhaften Ausbildungsform ein rechtwinkliges Trapez. Besonders vorteilhaft sind Ausgestaltungsformen, bei denen die Aussparungen im radial innen liegenden Teil der Schaufelkante, die Aussparungen im radial außen liegenden Teil der Schaufelkante und die Aussparungen im mittleren Bereich der radialen Ausdehnung an der Schaufelkante gegenseitig überdeckend ausgebildet sind. Eine Ausführung zeigt die Aussparungen an den Schaufeln des Rotorschaufelrades, eine Ausführungsart zeigt die Aussparungen an den Schaufeln des Statorschaufelrades. Besonders vorteilhaft ist eine Ausgestaltung, bei der Aussparungen sowohl in den Schaufeln des Rotorschaufelrades als auch in den Schaufeln des Statorschaufelrades vorgesehen sind und die Aussparungen an den Schaufeln des Rotorschaufelrades und an den Schaufeln des Statorschaufelrades unterschiedlich sind. Vorzugsweise Verwendung findet das wenigstens eine Rotorschaufelrad und das wenigstens eine Statorschaufelrad als Rotor- und Statorschaufelrad eines hydrodynamischen Retarders zur verschleißfreien Abbremsung eines Fahrzeuges im Straßenverkehrs.

Die Funktion der hydrodynamischen Maschine wird durch die vorgenommenen Änderungen nicht beeinträchtigt. Besonders das erforderliche Bremsmoment eines Retarders , der Kühlvolumenstrom und die Druckverhältnisse werden nicht verschlechtert. Durch die Änderung der Geometrie der Schaufeln wird der Impuls der hydrodynamischen Flüssigkeit beim Übertritt von drehendem zum ruhenden bzw. weniger schnell drehenden Bauteil oder vom ruhenden zum drehenden bzw. schneller drehenden Bauteil vermindert. Diese Verminderung bewirkt die Geräuschreduzierung.

Die Erfindung wird anhand einer Zeichnung näher erläutert:

Es zeigen:

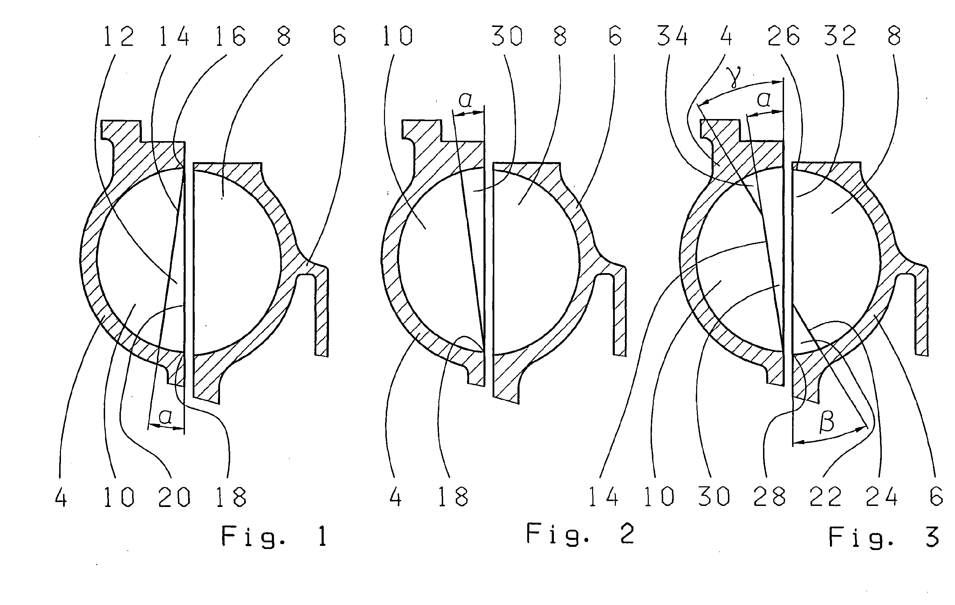

- Fig. 1 bis 31: Varianten der Aussparungsanordnung nach der Erfindung.

Die Fig. 1 zeigt in einer Schnittdarstellung als einen Ausschnitt aus einem Retarder 2 als einer hydrodynamischen Maschine ein gehäusefestes Statorschaufelrad 4 und ein gegenüber dem Statorschaufelrad 4 verdrehbares Rotorschaufelrad 6. Die Rotorschaufel 8 am Rotorschaufelrad 6 ist wie aus dem Stand der Technik bekannt vollständig halbkreisförmig ausgebildet und weist hier keinerlei Aussparungen auf. Demgegenüber ist an einer Statorschaufel 10 des Statorschaufelrades 4 eine Aussparung 12 in Form eines Kreissegmentes bzw. Halbkreissegmentes vorgesehen. Von der radial außen liegenden Bauteilkante 16 aus öffnet sich die Aussparung 12 unter einem Winkel α von beispielweise 8°. Im Bereich dieser Aussparung 12 ist die Schaufelkante 14 gegenüber einer Linie 20 zwischen der radial außen liegenden Bauteilkante 16 und der radial innen liegenden Bauteilkante 18 zurückgenommen.

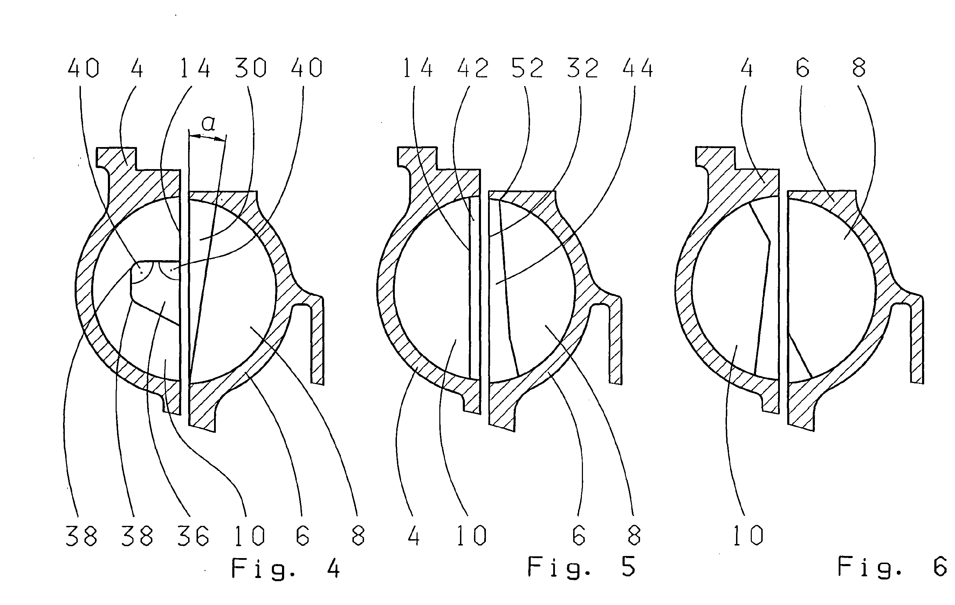

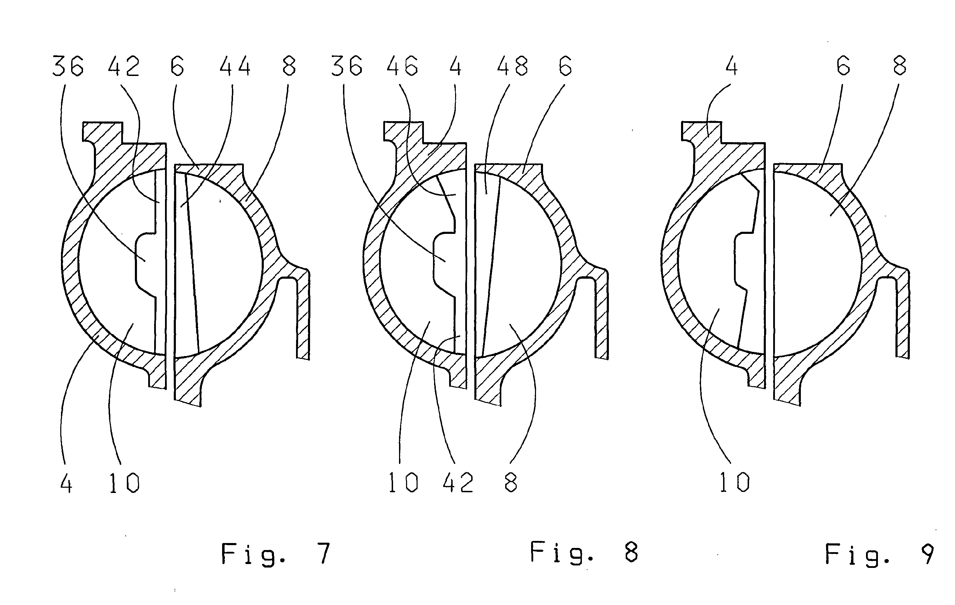

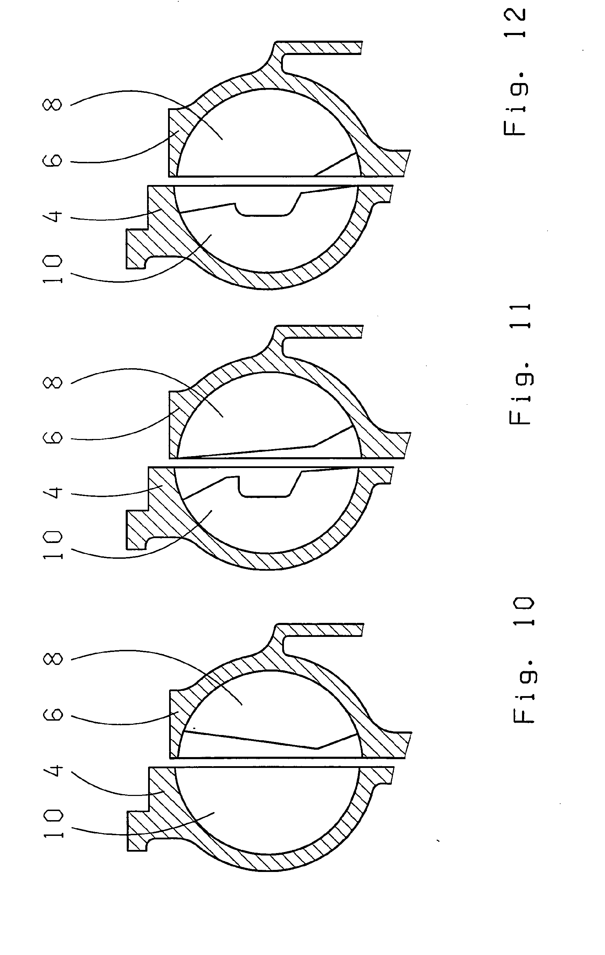

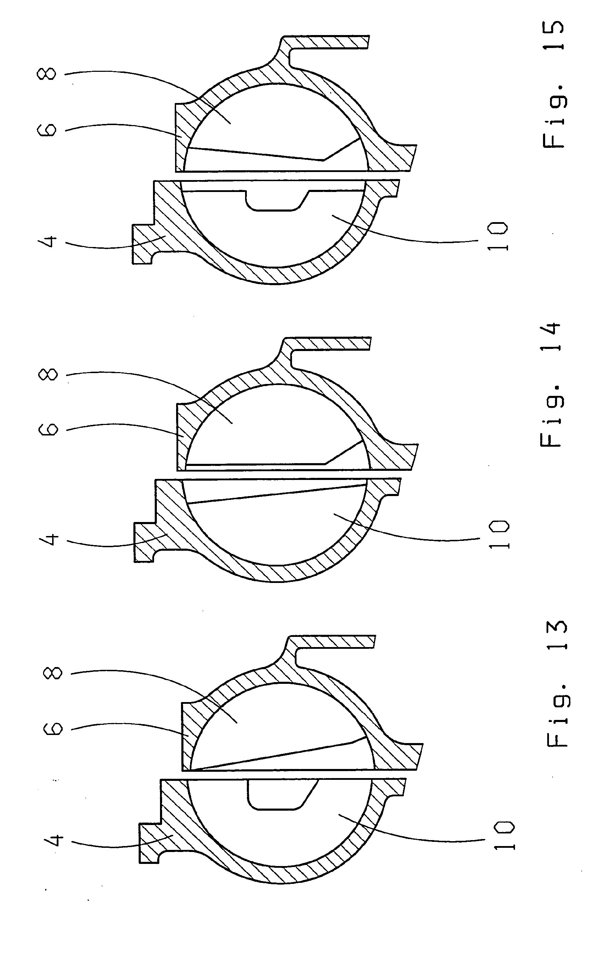

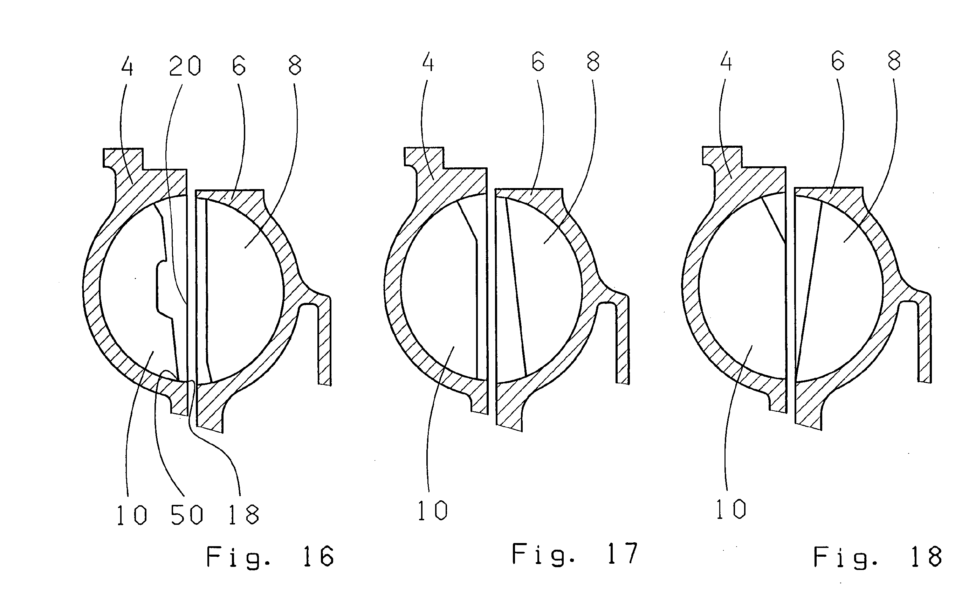

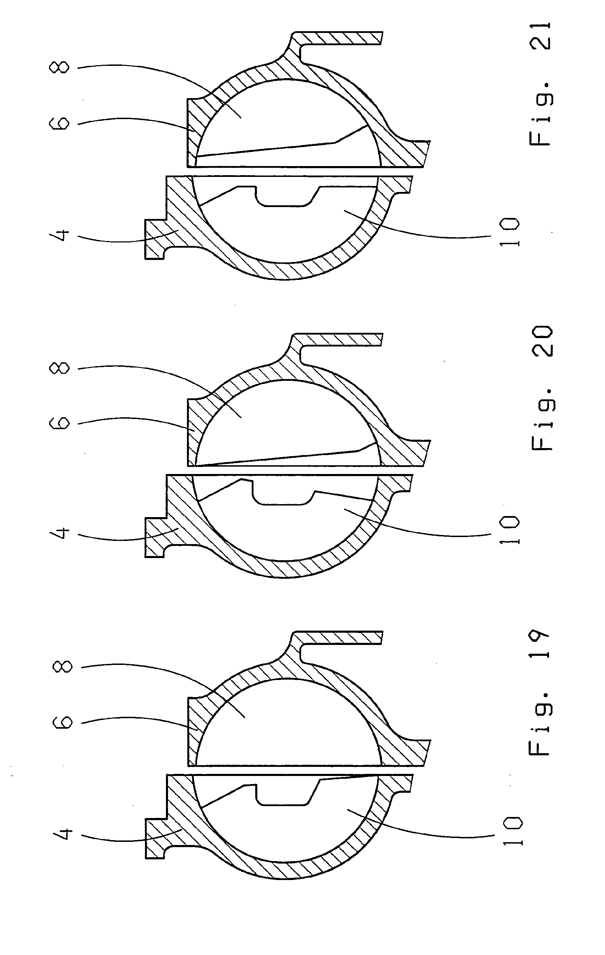

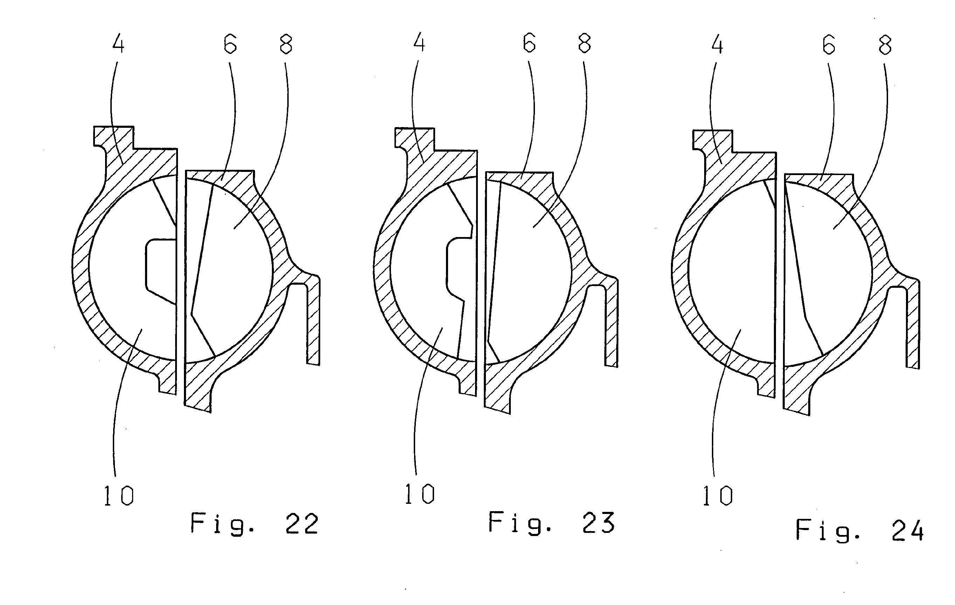

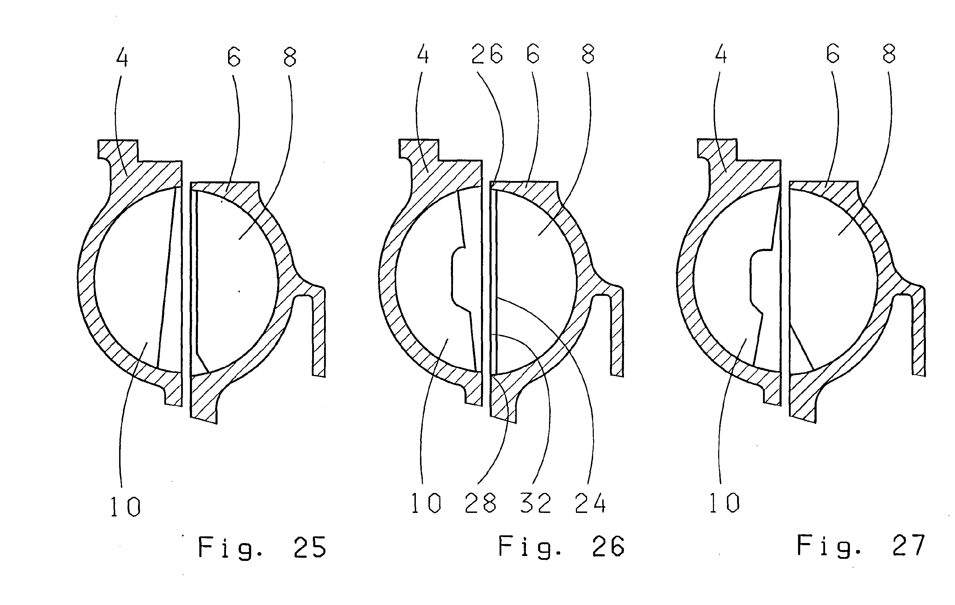

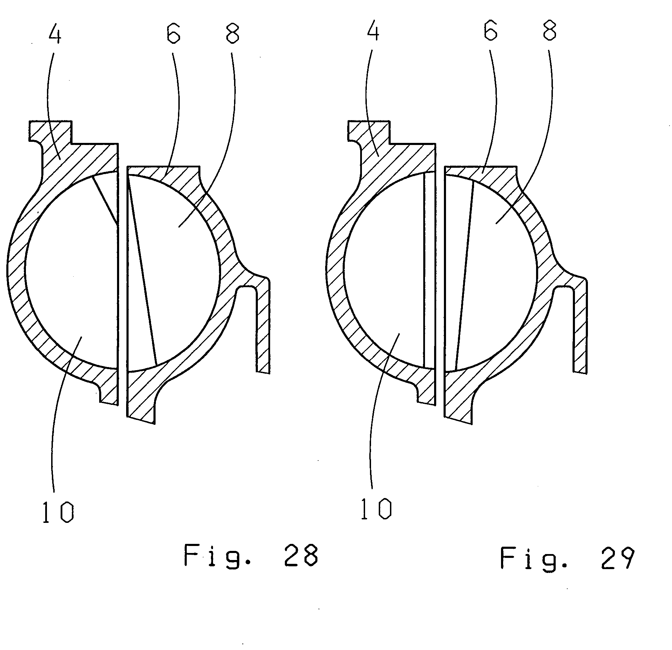

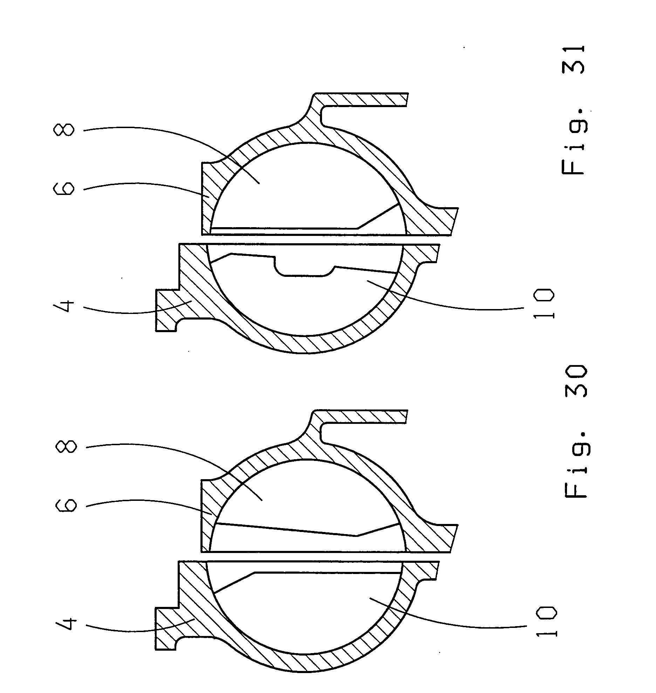

In der Fig. 2 entspricht die Rotorschaufel 8 der Rotorschaufel nach Fig. 1. Demgegenüber ist an der Statorschaufel 10 des Statorschaufelrades 4 ebenfalls eine Aussparung 30 in Form eines Kreissegmentes bzw. Halbkreissegmentes vorgesehen. Hier öffnet sich von der radial innen liegenden Bauteilkante 18 aus die Aussparung 30 unter einem Winkel α von ebenfalls beispielweise 8°. In der Fig. 3 weist die Rotorschaufel 8 eine Aussparung 22 auf, wobei die zurückgenommene Schaufelkante 24 nur in einem Teil einer gedachten Linie 32 zwischen der hier radial außen liegenden Bauteilkante 26 und der radial innen liegenden Bauteilkante 28 zurückgenommen ist und sich die Aussparung 22 von der Linie 32 aus unter einem Winkel β von beispielsweise 30° öffnet. Die Statorschaufel 10 weist zunächst eine Aussparung 30 auf entsprechend der Fig. 2. Diese Aussparung 30 wird von einer zweiten Aussparung 34 überdeckt, die sich von der Linie 32 aus unter einem Winkel γ von beispielsweise 30° öffnet. Hierdurch entsteht an der Schaufelkante 14 ein Knick. In der Fig. 4 weist die Rotorschaufel 8 eine Aussparung 30 auf entsprechend der Fig. 2. Die Statorschaufel 10 weist im mittleren Bereich ihrer radialen Ausdehnung eine trapezförmige Aussparung 36 auf. Die an der der Schaufelkante gegenüberliegenden Grundlinie des Trapezes liegenden Ecken 38 sind abgerundet ausgebildet. Zwei Winkel 40 der trapezförmigen Aussparung 36 sind rechtwinklig. In der Fig. 5 ist die Schaufelkante 14 an der Statorschaufel 10 auf ihrer ganzen Länge um den gleichen Wert zurückgenommen. Daher besitzt die Aussparung 42 hier eine nahezu rechtwinklige Form. Die Rotorschaufel 8 besitzt eine überdeckte Aussparung 44, in der zwei Segmente mit unterschiedlichem Winkel sich überdecken. Der Ausgangspunkt 52 am radial äußeren Teil des Rotors 6, von dem aus das größere Segment sich öffnet, liegt gegenüber der Linie 32 etwas zurückgenommen. Die Fig. 6 zeigt Aussparungen mit segmentförmige Ausbildung sowohl an der Rotorschaufel 8 als auch an der Statorschaufel 10. Die Aussparung an der Statorschaufel weist zwei überdeckende Segmente auf, wobei die Winkel der Segmente sich in gegenüberliegende Richtungen öffnen. Die Fig. 7 zeigt eine Überdeckung einer Aussparung 42 nach Fig. 5 an der Statorschaufel 10 mit einer Aussparung 36 nach Fig. 4. Die Rotorschaufel 8 weist eine einfache Aussparung 44 nach Fig. 5 ohne Überdeckung auf. Die Fig. 8 zeigt an der Statorschaufel 10 eine Überdeckung einer Aussparung 42 und einer Aussparung 36 nach Fig. 7 und einer zusätzlichen segmentförmigen Aussparung 46 am radial äußeren Ende der Statorschaufel 10. Die Rotorschaufel 8 weist eine der Aussparung 44 nach Fig. 7 entsprechende Aussparung 48 auf, deren Winkel sich jedoch zum Rotorschaufelradäußeren hin öffnet. Die Fig. 9 zeigt eine Statorschaufel 10 mit einer Überdeckung zweier segmentförmiger Aussparungen entsprechend Fig. 6, die noch von einer Aussparung entsprechend der Aussparung 36 nach Fig. 4 überdeckt wird. An der Rotorschaufel 8 ist hier keine Aussparung vorgesehen. Die Fig. 10 zeigt an der Rotorschaufel 8 eine aus zwei überdeckenden Segmenten gebildete Aussparung entsprechend der Statorschaufelaussparung nach Fig. 6, die hier jedoch mit jeweils gegenüberliegenden Winkeln ausgebildet ist. Die Statorschaufel 10 weist hier keine Aussparung auf. Die Fig. 11 zeigt eine Statorschaufel 10 mit einer Aussparung, die gebildet ist aus zwei sich überdeckenden Segmenten, deren unterschiedliche Winkel sich in die gleiche Richtung nach radial außen öffnen und die noch überdeckt sind von einer trapezförmigen Aussparung entsprechend Aussparung 36 nach Fig. 4. Die Aussparung an der Rotorschaufel 8 ist hier gebildet aus zwei sich überdeckenden Segmenten, deren unterschiedliche Winkel sich in die gleiche Richtung nach radial innen öffnen. In der Fig. 12 ist die Aussparung an der Statorschaufel 10 gebildet durch eine Überdeckung einer segmentförmigen Aussparung, deren Winkel sich nach radial außen öffnet mit einer trapezförmigen Aussparung entsprechend der Aussparung 36 in Fig. 4. An der Rotorschaufel 8 ist eine einfache Aussparung entsprechend der Aussparung 22 an der Fig. 3 vorgesehen. Bei der Anordnung nach Fig. 13 weist die Statorschaufel 10 eine trapezförmige Aussparung entsprechen der Aussparung 36 nach Fig. 4 auf. Die Aussparung an der Rotorschaufel 8 weist zwei überdeckende Segmente auf entsprechend der Aussparung an der Rotorschaufel nach Fig. 11, wobei hier andere Winkel gewählt sind. In der Fig. 14 weist die Statorschaufel 10 ein zurückgesetztes Kreissegment als Aussparung auf, das der Aussparung 44 an der Rotorschaufel 8 nach Fig. 7 entspricht, wobei der Winkel hier sich nach radial außen öffnet. Die Aussparung an der Rotorschaufel 10 ist gebildet aus einer Aussparung entsprechend der Aussparung 42 an der Statorschaufel 10 gemäß Fig. 5, die überdeckt wird von einer segmentförmigen Aussparung entsprechend der Aussparung 22 der Fig. 3. Die Fig. 15 zeigt eine Aussparung an der Statorschaufel 10 entsprechende der Überdeckung der Aussparungen 36 und 42 nach Fig. 7. Die Aussparung an der Rotorschaufel 8 entspricht der Aussparung an der Rotorschaufel 8 in der Fig. 10 mit demgegenüber geänderten Winkelwerten. Die Aussparung an der Rotorschaufel 8 in der Fig. 16 entspricht der Aussparung an der Rotorschaufel 8 nach der Fig. 14 mit verändertem Winkel und verändertem Wert für die zurückgenommene Rotorschaufelkante. Die Aussparung an der Statorschaufel 10 ist gebildet entsprechend einer Aussparung an der Statorschaufel 10 in Fig. 11, die jedoch von der Linie 20 noch um einen Betrag zurückgenommen ist, so dass der Winkel nicht von der radial innenliegenden Bauteilkante 18 ausgeht, sondern von einem demgegenüber zurückgenommenen Punkt 50. Die Aussparung an der Rotorschaufel 8 nach Fig. 17 entspricht der Aussparung 44 nach Fig. 7. An der Statorschaufel 10 ist die Aussparung gebildet aus der Überdeckung gemäß der Aussparung 42 aus der Fig. 5 und gemäß der segmentförmigen Aussparung 46 in der Fig. 8. In der Fig. 18 weist die Statorschaufel 10 eine segmentförmige Aussparung gemäß der Aussparung 46 nach Fig. 8 auf. In der Rotorschaufel 8 ist eine Aussparung gemäß der Aussparung 30 nach Fig. 4 vorgesehen. Keine Aussparung in der Rotorschaufel 8 weist die Fig. 19 auf. Die Aussparung in der Statorschaufel 10 entspricht der Aussparung in der Statorschaufel 10 nach der Fig. 11, wobei unterschiedliche Winkel vorliegen. In der Fig. 20 wird die Aussparung der Statorschaufel 10 ähnlich gebildet wie die Aussparung in der Statorschaufel 10 nach der Fig. 9. Auch hier sind andere Winkel der segmentförmigen Aussparungen vorgesehen. Die Aussparung der Rotorschaufel 8 entspricht mit teilweise geänderten Winkeln der Aussparung in der Rotorschaufel 8 der Fig. 11. Die Aussparung der Statorschaufel 10 in der Fig. 21 entspricht der Fig. 8. Ähnlich der Aussparung in der Rotorschaufel 8 in der Fig. 5 ist hier die Ausgestaltung der Aussparung in der Rotorschaufel 8 vorgesehen. In der Fig. 22 ist neben einer segmentförmigen Aussparung im radial außen liegenden Teil der Statorschaufel 10 noch eine trapezförmige Aussparung im radial mittleren Bereich der Statorschaufel 10 vorgesehen. Eine Überdeckung von Aussparungen ist hier nicht gegeben, sondern die Aussparungen sind quasi benachbart. Die Form der Rotorschaufel 8 entspricht der aus der Fig. 10 bekannten Rotorschaufel 8. Für die Fig. 23 wird eine Form der Statorschaufel 10 gemäß der Fig. 20 verwendet. Mit geänderten Winkeln entspricht die Aussparung der Rotorschaufel 8 der Rotorschaufelaussparung nach Fig. 10. Für die Fig. 24 ist eine kleine segmentförmige Aussparung im Statorschaufelrad 10 vorgehen, die sich im radial äußeren Bereich der Statorschaufel 10 befindet und bei der sich der Winkel nach radial außen öffnet. Die Aussparung im Rotorschaufelrad 8 entspricht mit geänderten Winkeln der Aussparung an der Rotorschaufel nach Fig. 11. In der Fig. 25 ist in der Rotorschaufel 8 eine Aussparung vorgesehen, die der Aussparung in der Rotorschaufel 8 nach Fig. 14 entspricht. Die segmentförmige Aussparung in dem radial innen liegenden Bereich der Rotorschaufel 8 ist dabei kleiner als in der Fig. 14 vorgesehen. Die Statorschaufel 10 weist eine Aussparung auf, wie sie auch der Aussparung in der Statorschaufel 10 nach Fig. 14 entspricht, wobei hier jedoch der Winkel sich nach radial innen hin öffnet. Für die Fig. 26 weist die Rotorschaufel 8 eine zurückgenommene Schaufelkante 24 auf, die auf ihrer ganzen Länge um den gleichen Betrag gegenüber der Linie 32 zwischen der radial außen liegenden Bauteilkante 26 und der radial innen liegenden Bauteilkante 28 zurückgenommen ist und somit parallel zu dieser Linie 32 verläuft. Die Statorschaufel 10 weist eine Aussparung entsprechend der Aussparung in der Statorschaufel 10 nach der Fig. 12 auf. Eine der Aussparung an der Rotorschaufel 8 der Fig. 12 entsprechende Aussparung ist an der Rotorschaufel 8 der Fig. 27 vorgesehen. Auch die Aussparung an der Statorschaufel 10 weist ebenso wie die Aussparung an der Statorschaufel 10 nach der Fig. 12 eine Überdeckung einer segmentförmigen und einer trapezförmigen Aussparung im mittleren Bereich auf. Der Winkel der segmentförmigen Aussparung öffnet sich in der Fig. 27 jedoch nach radial innen, beträgt aber ebenfalls vorzugsweise 8°. Die Beschaufelung der Fig. 28 ähnelt der Beschaufelung der Fig. 18, wobei die Ausbildung der Statorschaufel 10 identisch ist. Die segmentförmige Aussparung an der Rotorschaufel 8 weist einen mit dem gleichen Wert von vorzugsweise 8° ausgebildeten Winkel auf wie in der Fig. 18, der sich jedoch hier nach radial innen öffnet. An der Fig. 29 ist die Aussparung an der Statorschaufel 10 der Aussparung der Statorschaufel 10 in der Fig. 5 entsprechend ausgebildet, während die Ausgestaltung der Rotorschaufel 8 der Ausgestaltung der Rotorschaufel 8 in der Fig. 8 entspricht. Die Fig. 30 zeigt eine Statorbeschaufelung auf, die gemäß der Beschaufelung am Statorschaufelrad 4 nach der Fig. 17 ausgestaltet ist. Das Rotorschaufelrad 8 ist unter Verwendung veränderter Winkel entsprechend dem Rotorschaufelrad 8 nach der Fig. 10 ausgeführt. Schließlich zeigt die Fig. 31 unter der Verwendung geänderter Winkel eine Statorschaufel 10 auf, die der Form der Statorschaufel 10 der Fig. 9 entspricht. Die Rotorschaufel 8 ist ausgebildet wie die Rotorschaufel 8 nach der Fig. 14.

### Bezugszeichen

- 2: Retarder
- 4: Statorschaufelrad
- 6: Rotorschaufelrad
- 8: Rotorschaufel
- 10: Statorschaufel
- 12: Aussparung
- 14: Schaufelkante
- 16: Bauteilkante
- 18: Bauteilkante
- 20: Linie
- 22: Aussparung
- 24: Schaufelkante
- 26: Bauteilkante
- 28: Bauteilkante
- 30: Aussparung
- 32: Linie
- 34: Aussparung
- 36: Aussparung
- 38: Ecke
- 40: Winkel
- 42: Aussparung
- 44: Aussparung
- 46: Aussparung
- 48: Aussparung
- 50: Punkt
- 52: Ausgangspunkt

## Patentansprüche

1. Hydrodynamische Maschine (2) mit einem Gehäuse, das wenigstens ein Rotorschaufelrad (6) und ein Statorschaufelrad (4) umfasst und das Rotorschaufelrad (6) und das Statorschaufelrad (4) jeweils eine Anzahl von Schaufeln (8, 10) aufweist, **dadurch gekennzeichnet, dass** an allen Schaufeln (8, 10) wenigstens des Rotorschaufelrades (6) oder des Statorschaufelrades (4) Aussparungen (12, 22, 30, 34, 36, 42, 44, 46, 48) vorgesehen sind zur Verminderung der Geräuschentwicklung.

2. Hydrodynamische Maschine (2) nach Anspruch 1, **dadurch gekennzeichnet, dass** an allen Schaufeln (8, 10) wenigstens des Rotorschaufelrades (6) oder des Statorschaufelrades (4) die projizierte Schaufelfläche der Schaufel (8, 10) gegenüber der projizierten Fläche einer wenigstens weitgehend halbkreisförmig ausgebildet Schaufel zur Verminderung der Geräuschentwicklung in Form der Aussparungen (12, 22, 30, 34, 36, 42, 44, 46, 48) reduziert ist.

3. Hydrodynamische Maschine (2) nach Anspruch 1 oder 2, **dadurch gekennzeichnet, dass** die Schaufel (8, 10) an ihrem radial außen liegenden Teil der Schaufelkante (14, 24) eine Aussparung (30, 34, 42, 46, 48) aufweist.

4. Hydrodynamische Maschine (2) nach einem der Ansprüche 1 bis 3, **dadurch gekennzeichnet, dass** die Schaufel (8, 10) an ihrem radial innen liegenden Teil der Schaufelkante (14, 24) eine Aussparung (12, 22, 42, 44) aufweist.

5. Hydrodynamische Maschine (2) nach einem der Ansprüche 1 bis 4, **dadurch gekennzeichnet, dass** die Aussparung (12, 22, 30, 34, 44, 46, 48) ein Kreissegment unter einem Winkel von 0 bis 30° gegenüber der Schaufelkante (14, 24) aufweist, vorzugsweise 8°.

6. Hydrodynamische Maschine (2) nach einem der Ansprüche 1 bis 5, **dadurch gekennzeichnet, dass** die Aussparungen (34) die Form zweier überdeckender Kreissegmente aufweisen.

7. Hydrodynamische Maschine (2) nach einem der Ansprüche 1 bis 4, **dadurch gekennzeichnet, dass** die Schaufel (8, 10) im mittleren Bereich ihrer radialen Ausdehnung an der Schaufelkante (14, 24) eine Aussparung (36, 42) aufweist.

8. Hydrodynamische Maschine (2) nach Anspruch 7, **dadurch gekennzeichnet, dass** sich die Aussparung (42) im mittleren Bereich über die gesamte Länge der Schaufelkante (14, 24) erstreckt.

9. Hydrodynamische Maschine (2) nach Anspruch 7, **dadurch gekennzeichnet, dass** die Aussparung (36) im mittleren Bereich eine trapezförmige Ausgestaltung aufweist.

10. Hydrodynamische Maschine (2) nach Anspruch 9, **dadurch gekennzeichnet, dass** bei der trapezförmigen Ausgestaltung die nicht an den Schaufelkanten (14, 24) liegenden Ecken abgerundete Ecken (38) sind.

11. Hydrodynamische Maschine (2) nach Anspruch 9 oder 10, **dadurch gekennzeichnet, dass** die trapezförmige Ausgestaltung ein rechtwinkliges Trapez umfasst.

12. Hydrodynamische Maschine (2) nach einem der Ansprüche 1 bis 11, **dadurch gekennzeichnet, dass** Aussparungen (12, 22, 42, 44) im radial innen liegenden Teil der Schaufelkante (14, 24), Aussparungen (30, 34, 42, 46, 48) im radial außen liegenden Teil der Schaufelkante (14, 24) und Aussparungen (36, 42) im mittleren Bereich ihrer radialen Ausdehnung an der Schaufelkante (14, 24) gegenseitig überdeckend ausgebildet sind.

13. Hydrodynamische Maschine (2) nach einem der Ansprüche 2 bis 12, **dadurch gekennzeichnet, dass** die projizierte Schaufelfläche der Schaufeln (8) des Rotorschaufelrad (6) reduziert ist.

14. Hydrodynamische Maschine (2) nach einem der Ansprüche 2 bis 12, **dadurch gekennzeichnet, dass** die projizierte Schaufelfläche der Schaufeln (10) des Statorschaufelrades (4) reduziert ist.

15. Hydrodynamische Maschine (2) nach einem der Ansprüche 1 bis 14, **dadurch gekennzeichnet, dass** Aussparungen (12, 22, 30, 34, 36, 42, 44, 46, 48) sowohl in den Schaufeln (8) des Rotorschaufelrades (6) als auch in den Schaufeln (10) des Statorschaufelrades (4) vorgesehen sind und die Aussparungen (12, 22, 30, 34, 36, 42, 44, 46, 48) an den Schaufeln (8) des Rotorschaufelrades (6) und an den Schaufeln (10) des Statorschaufelrades (4) unterschiedlich sind.

16. Hydrodynamische Maschine (2) nach einem der Ansprüche 1 bis 15, **dadurch gekennzeichnet, dass** das wenigstens eine Rotorschaufelrad (6) und das wenigstens eine Statorschaufelrad (4) Rotor- und Statorschaufelrad (4, 6) eines hydrodynamischen Retarders (2) sind.
